# EUROPÄISCHE PATENTSCHRIFT

(11) **EP 1 597 544 B1**
(45) Veröffentlichungstag und Bekanntmachung des Hinweises auf die Patenterteilung: **10.04.2019**
(21) Anmeldenummer: 04709614.4
(22) Anmeldetag: 10.02.2004
(51) Int. Cl.: G01F 23/284, G01F 23/26

(54) **VORRICHTUNG ZUR BESTIMMUNG UND/ODER ÜBERWACHUNG DES FÜLLSTANDS EINES MEDIUMS IN EINEM BEHÄLTER**
DEVICE FOR DETERMINING AND/OR MONITORING THE LEVEL OF A MEDIUM IN A CONTAINER
DISPOSITIF PERMETTANT DE DETERMINER ET/OU DE SURVEILLER LE NIVEAU DE REMPLISSAGE D'UN AGENT DANS UN CONTENANT

(30) Priorität: 26.02.2003 DE 10308495
(43) Veröffentlichungstag der Anmeldung: 23.11.2005
(73) Patentinhaber: Endress+Hauser SE+Co. KG, 79689 Maulburg (DE)
(72) Erfinder: REIMELT, Ralf, 79110 Freiburg (DE); OSSWALD, Dirk, 79650 Schopfheim (DE)
(74) Vertreter: Andres, Angelika Maria
(86) Internationale Anmeldenummer: PCT/EP2004/001217
(87) Internationale Veröffentlichungsnummer: WO 2004/076982

(56) Entgegenhaltungen:
- EP-A- 0 773 433
- DE-A- 19 728 280
- DE-A- 19 944 103
- DE-U- 8 216 324
- US-A- 6 019 007
- US-A1- 2002 053 238

## Beschreibung

Die Erfindung bezieht sich auf eine Vorrichtung zur Bestimmung und/oder Überwachung des Füllstands eines Mediums in einem Behälter.

Zur Bestimmung des Füllstandes eines Mediums in einem Behälter werden Meßsysteme eingesetzt, die unterschiedliche physikalische Größen messen. Anhand dieser Größen wird nachfolgend die gewünschte Information über den Füllstand abgeleitet. Neben mechanischen Abtastern werden kapazitive, konduktive oder hydrostatische Meßsonden eingesetzt, ebenso wie Detektoren, die auf der Basis von Ultraschall, Mikrowellen oder radioaktiver Strahlung arbeiten.

Bei einer Vielzahl von Einsatzgebieten, beispielsweise in der Petrochemie, Chemie und Lebensmittelindustrie, sind hochgenaue Messungen des Füllstandes von Flüssigkeiten oder Schüttgütern in Behältern (Tanks, Silos, usw.) gefordert. Deshalb kommen hier in zunehmendem Maße Sensoren zum Einsatz, bei denen kurze elektromagnetische Hochfrequenzimpulse (TDR-Verfahren oder Puls-Radar-Verfahren) oder kontinuierliche frequenzmodulierte Mikrowellen (z. B. FMCW-Radar-Verfahren) auf ein leitfähiges Element bzw. einen Wellenleiter eingekoppelt und mittels des Wellenleiters in den Behälter, in dem das Füllgut gelagert ist, hineingeführt werden. Als Wellenleiter kommen die bekannten Varianten: Oberflächenwellenleiter nach Sommerfeld oder Goubau oder Lecherwellenleiter in Frage.

Da gemäß einer besonders bevorzugten Ausgestaltung die erfindungsgemäße Lösung auf ein TDR-Füllstandsmeßgerät abgestimmt ist, wird nachfolgend die Arbeitsweise eines entsprechenden Meßgeräts etwas näher beschrieben. Physikalisch gesehen wird bei TDR-Meßgeräten der Effekt ausgenutzt, daß an der Grenzfläche zwischen zwei verschiedenen Medien, z. B. Luft und Öl oder Luft und Wasser, infolge der sprunghaften Änderung (Diskontinuität) der Dielektrizitätszahlen beider Medien ein Teil der geführten Hochfrequenz-Impulse bzw. der geführten Mikrowellen reflektiert und über das leitfähige Element zurück in eine Empfangsvorrichtung geleitet wird. Der reflektierte Anteil (→ Nutzechosignal) ist dabei um so größer, je größer der Unterschied in den Dielektrizitätszahlen der beiden Medien ist. Anhand der Laufzeit des reflektierten Anteils der Hochfrequenz-Impulse bzw. der CW-Signale (Echosignale) läßt sich die Entfernung zur Oberfläche des Füllguts bestimmen. Bei Kenntnis der Leerdistanz des Behälters kann der Füllstand des Füllguts in dem Behälter berechnet werden. Soll eine Grenzflächenbestimmung durchgeführt werden, so läßt sich anhand der Meßergebnisse die Lage der Grenzfläche bestimmen.

In der EP 0 773 433 A ist eine Durchführung für ein elektrisches Hochfrequenzsignal beschrieben, die ein Isolationselement aus Keramik umfasst. Das Isolationselement ist zwischen einem das Hochfrequenzsignal führenden Leitelement und einem Trägerelement angeordnet und gewährleistet in Zusammenwirken mit zwei O-Ringen die Dichtigkeit der Durchführung.

In der DE 82 16 324 U ist eine Sonde zur kapazitiven Füllstandsmessung in einem Behälter beschrieben, die eine druckdicht und elektrisch isoliert durch eine Öffnung in einer Behälterwand hindurch geführte Sondenelektrode umfasst.
Der Erfindung liegt die Aufgabe zugrunde, eine Füllstandsmeßvorrichtung vorzuschlagen, die für den Hochtemperatur- und/oder den Hochdruckbereich geeignet ist. Hochtemperaturbereich bedeutet im Zusammenhang mit der vorliegenden erfindungsgemäßen Lösung, daß die Vorrichtung bis zu einer Prozeßtemperatur von ca. 400° C problemlos eingesetzt werden kann. Hochdruckbereich bedeutet, daß die erfindungsgemäße Vorrichtung bis zu Drücken von ca. 1.000 bar zuverlässig arbeitet.

Die Aufgabe wird durch eine Vorrichtung gemäß Anspruch 1 gelöst.

Im Falle eines TDR-Füllstandsmeßgeräts spricht man bei dem ersten leitfähigen Element vom Innenleiter und bei dem zweiten leitfähigen Element vom Außenleiter. Zu erwähnen bleibt, daß der prinzipielle Aufbau von Meßgeräten, die den Füllstand über eine Kapazitätsmessung oder über eine Messung der Laufzeit von hochfrequenten Meßsignalen bestimmen, hinreichend bekannt ist. Entsprechende Geräte werden von der Anmelderin beispielsweise unter der Bezeichnung Multicap und Levelflex angeboten und vertrieben. Erfindungs-gemäß werden die bekannten Geräte so modifiziert, daß sie für den Einsatz im Hochtemerpatur- und/oder im Hochdruckbereich geeignet sind.

Gemäß einer vorteilhaften Weiterbildung der erfindungsgemäßen Vorrichtung sind das erste leitfähige Element, das zweite leitfähige Element und die Dicht-keramik im wesentlichen koaxial zueinander angeordnet. Typisch ist dieser Aufbau bei vielen TDR-Füllstandsmeßgeräten - aber auch bei kapazitiven Meßgeräten. Es versteht sich von selbst, daß die erfindungsgemäße Lösung nicht auf den radialsymmetrischen Aufbau beschränkt ist. So können bei einem kapazitiven Meßgerät oder bei einem TDR-Füllstandsmeßgerät die beiden leitfähigen Elemente auch parallel zueinander angeordnet sein.

Erfindungsgemäß handelt es sich bei der ersten Dichtung und der zweiten Dichtung um eine Stopfbuchs-Packung, die aus mehreren ringförmigen Teilelementen aus Graphit besteht. Die günstigen Eigenschaften dieser Ausgestaltung werden an nachfolgender Stelle noch im Detail beschrieben.

Eine Weiterbildung der erfindungsgemäßen Vorrichtung, die insbesondere im Zusammenhang mit einem TDR-Füllstandsmeßgerät erhebliche Vorteile mit sich bringt, sieht in der Dichtkeramik zumindest eine Materialaussparung vor. Bevorzugt verläuft die Materialaussparung näherungsweise koaxial. Hierdurch läßt sich -wie gleichfalls an nachfolgender Stelle noch näher ausgeführt wird - der Wellenwiderstand der Durchführung im Bereich der Dichtkeramik erheblich vergrößern. Um der Dichtkeramik trotz Aussparung die erforderliche radiale Stabilität zu verleihen, sind gemäß einer vorteilhaften Ausgestaltung im Bereich der Materialaussparung im wesentlichen radial verlaufenden Stege vorgesehen.

Um zu verhindern, daß sich das erste leitfähige Element bzw. der Wellenleiter unter Krafteinwirkung in axialer Richtung bewegt oder daß Biegemomente auf das erste leitfähige Element Auswirkungen haben, sind Arretierelemente vorgesehen, die für einen sicheren und stabilen Halt des ersten leitfähigen Elements sorgen.

Darüber hinaus ist es für ein problemloses Funktionieren des Füllstandsmeßgeräts von großer Wichtigkeit, daß die im Prozeß herrschenden hohen Temperaturen nicht aufgrund des Wärmetransports zur Elektronik - sprich zur Regel-/Auswerteeinheit - gelangen. Die im Prozeß herrschenden hohen Temperaturen würden ansonsten sehr schnell zu einer Zerstörung und damit zu einem Ausfall der Elektronik führen. Gemäß einer bevorzugten Weiterbildung der erfindungsgemäßen Vorrichtung ist daher eine Temperaturreduktionseinheit vorgesehen, die in axialer Richtung im Bereich zwischen der Dichtkeramik und der Regel-/Auswerteeinheit zu finden ist.

Wie bereits erwähnt, werden Stopfbuchs-Packungen, insbesondere Graphit-Stopfbuchs-Packungen in Verbindung mit der erfindungsgemäßen Lösung eingesetzt, da diese Packungen sich durch hervorragende elastische sowie temperatur- und druckresistente Eigenschaften auszeichnen. Sie haben allerdings, z.B. gegenüber einer Lötverbindung den Nachteil, daß sie nicht gasdicht sind. Um das Meßgerät dennoch auch gasdicht zur Elektronik hin abzudichten, ist im Bereich zwischen der Temperaturreduktionseinheit und der Regel-/Auswerteeinheit eine Glasdurchführung vorgesehen. Glasdurchführungen als solche sind in der Prozeßmeßtechnik bestens bekannt und werden von der Anmelderin im Zusammenhang mit einer Vielzahl von Meßgeräten angeboten und vertrieben.

Die Erfindung wird anhand der nachfolgenden Zeichnungen näher erläutert. Es zeigt:
Fig. 1: eine schematische Darstellung eines TDR-Füllstandsmeßgeräts,
Fig. 2: eine schematische perspektivische Ansicht einer bevorzugten Ausgestaltung der erfindungsgemäßen Vorrichtung,
Fig. 3: einen Längsschnitt der in Fig. 2 gezeigten Ausgestaltung der erfindungsgemäßen Vorrichtung,
Fig. 4: eine perspektivische Ansicht der Dichtkeramik,
Fig. 4a: eine Draufsicht auf die in Fig. 4 gezeigte Dichtkeramik,
Fig. 4b: einen Schnitt gemäß der Kennzeichnung B-B in Fig. 4 und
Fig. 5: einen Längsschnitt einer zweiten bevorzugten Ausführungsform der erfindungsgemässen Vorrichtung.

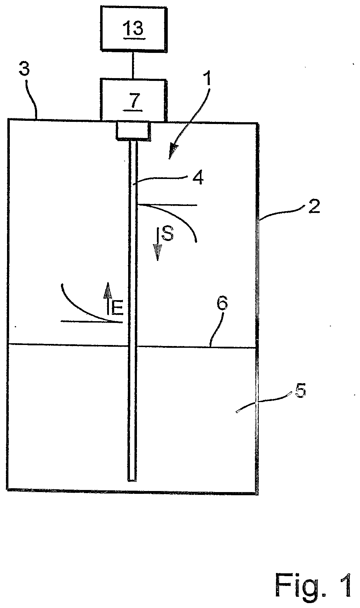

In Fig. 1 ist ein TDR-Füllstandsmeßgerät 1 dargestellt, das am Deckel 3 des Behälters 2 montiert ist und das dazu dient, den Füllstand eines in dem Behälter 2 befindlichen Mediums 5 zu detektieren bzw. zu überwachen. Hierzu werden von der in der Regel-/Auswerteeinheit 13 integrierten Sendeeinheit Meßsignale S erzeugt und über die Einkoppeleinheit 7 auf den Wellenleiter 4 eingekoppelt. Ein Meßsignal S ist in der Fig. 1 als Puls stilisiert dargestellt. Um Aussagen über den Füllstand des Mediums 5 in dem Behälter 2 machen zu können, reicht der Wellenleiter 4 bis zum Boden des Behälters 2. Es versteht sich von selbst, daß das TDR-Füllstandsmeßgerät auch an einer anderen geeigneten Position im/am Behälter angebracht sein kann.

Bei der Füllstandsmessung mittels geführter hochfrequenter Meßsignale wird der physikalische Sachverhalt ausgenutzt, daß ein gewisser Anteil E eines an dem Wellenleiter 4 geführten hochfrequenten Meßsignals S reflektiert wird, sobald das Meßsignal S auf die Grenzfläche zwischen zwei Medien mit unterschiedlichen Dielektrizitätskonstanten trifft. Der reflektierte Anteil E ist hierbei um so größer, je stärker die Dielektrizitätskonstanten der beiden Medien voneinander differieren. Man spricht in diesem Zusammenhang auch von einem Impedanzsprung. Ein Impedanzsprung tritt im gezeigten Fall auf, wenn das Meßsignal S auf die Oberfläche 6 des Mediums 5 trifft. Der reflektierte Anteil E des Meßsignals zeigt sich in der Echokurve als ausgeprägter Peak bzw. als sog. Nutzechosignal. Die Echokurve selbst repräsentiert die Amplituden des Meßsignals in Abhängigkeit von der Laufzeit bzw. von der durchlaufenen Strecke. Die Regel-/Auswerteeinheit 13 ermittelt die Laufzeit dieses Nutzechosignals und errechnet daraus bei bekannter Höhe des Behälters 2 den Füllstand des Mediums 5 in dem Behälter 2.

Anhand des Zuvorgesagten ist klar, daß Impedanzsprünge nicht nur dort auftreten, wo sie für die beabsichtigte Füllstandsmessung mittels der Laufzeit eines Meßsignals von ausschlaggebender Wichtigkeit sind - also hier am Übergang 'Luft bzw. Behälteratmosphäre-Medium 5'. Impedanzsprünge zeigen sich auch bei den unterschiedlichen Übergängen im Bereich der Einkoppeleinheit 7. Da jeder Impedanzsprung zu Reflexionen führt, die die Intensität des Meßsignals S verringern und somit die Meßgenauigkeit/ Meßfähigkeit reduzieren, ist die Einkoppeleinheit 7 so ausgestaltet, daß sich die Impedanz bzw. der Wellenwiderstand über den Bereich Einkoppeleinheit 7 bis hin zum Wellenleiter 4 möglichst wenig ändert. Die Übergänge als solche sind üblicherweise unvermeidlich, da die Meßsignale von dem filigranen Innenleiter und Außenleiter des Koaxkabels 30 auf den stabilen Wellenleiter 4 des TDR-Füllstandsmeßgeräts 1 geführt werden müssen. Eine ausreichende Stabilität und damit auch Dimensionierung des Wellenleiters 4 ist erforderlich, da dieser a) üblicherweise eine Länge von vielen Metern hat und b) mit dem mehr oder weniger turbulenten und aggressiven Prozeßmedium 5 in direkten Kontakt kommt.
Darüber hinaus ist das erfindungsgemäße TDR-Füllstandsmeßgerät 1 so ausgestaltet, daß es auch für den Hochtemperatur- und/oder Hochdruckbereich eingesetzt werden kann.

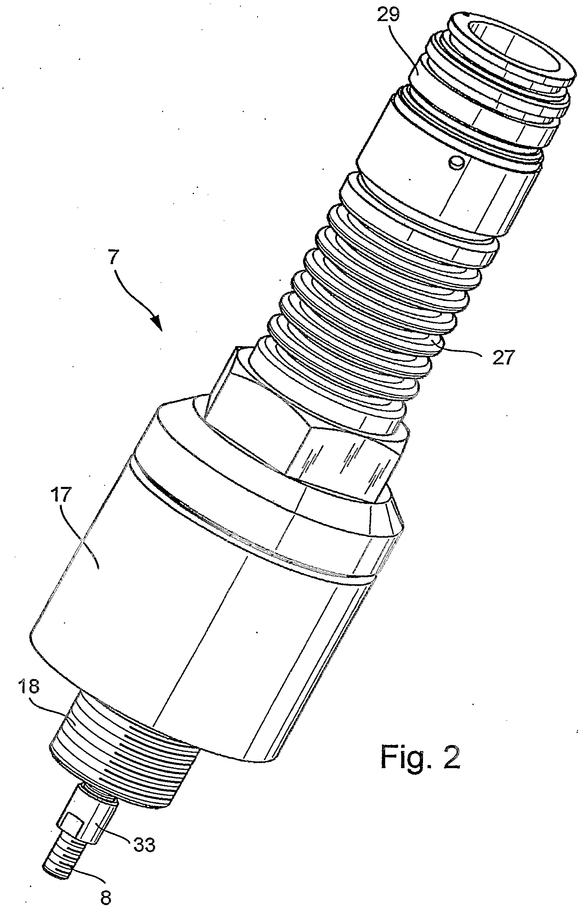

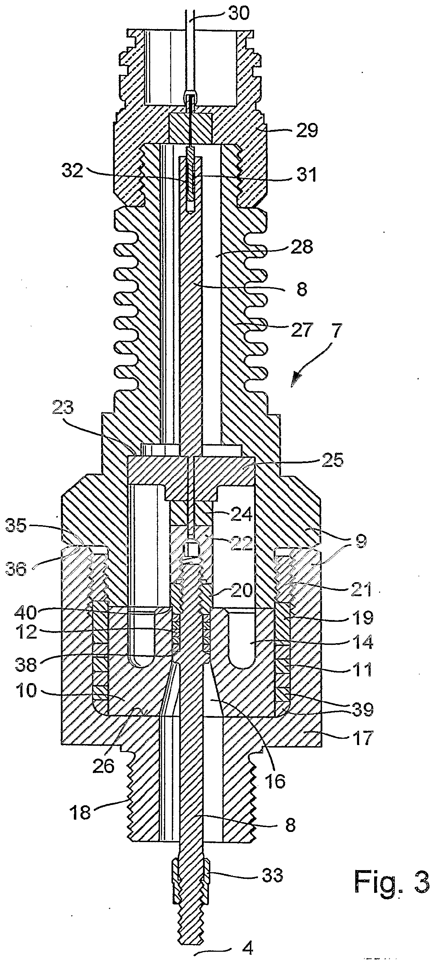

Fig. 2 zeigt eine schematische perspektivische Ansicht einer bevorzugten Ausgestaltung einer Einkoppeleinheit 7, die für den Hochtemperatur- und/oder den Hochdruckbereich bestens geeignet ist. Fig. 3 zeigt die Einkoppeleinheit 7 im Längsschnitt. Hochtemperaturbereich bedeutet im Zusammenhang mit der erfindungsgemäßen Lösung, daß das Füllstandsmeßgerät 1 bis zu einer Prozeßtemperatur von ca. 400° C problemlos einsetzbar ist; Hochdruckbereich bedeutet, daß das Füllstandsmeßgerät 1 bis zu Drücken von ca. 1.000 bar zuverlässig arbeitet.

Wie bereits gesagt, dient die Einkoppeleinheit 7 dazu, die von der Regel-/Auswerteeinheit 13 gelieferten und über das aus Innen- und Außenleiter bestehende Koaxkabel 30 geführten hochfrequenten Meßsignale möglichst verlustfrei auf den Wellenleiter 4 einzukoppeln bzw. aus dem Wellenleiter 4 auszukoppeln. Der Wellenleiter 4 entspricht hierbei der direkten Verlängerung des Innenleiters 8 der Einkoppeleinheit 7 und des Koaxkabels 30. Selbstverständlich kann auch eine sog. Direkteinkopplung realisiert sein, die ohne das Koaxkabel auskommt.

Die Rotationssymmetrie des Koaxkabels 30 spiegelt sich auch in der Einkoppeleinheit 7 wieder: Der Innenleiter 8 ist zentrisch bezüglich des Außenleiters 9 der Einkoppeleinheit 7 angeordnet. Der Außenleiter 9 entspricht im gezeigten Fall einer Kombination von Glasdurchführung 29, Temperaturreduktionseinheit 27, Gehäusetopf 17 und Einschraubteil 18. Die Kontaktfläche 36 des Gehäusetopfes 17 und die Kontaktfläche 35 der Temperaturreduktionseinheit 27 sind bevorzugt miteinander verschweißt.

In dem Gehäusetopf 17 ist die Dichtkeramik 10 mit einer mittig angeordneten Durchführung zur Aufnahme des Innenleiters 8 vorgesehen. Hauptaufgabe der Dichtkeramik 10, der ersten Dichtung 11, die die Dichtkeramik 10 gegen die Außenwand des Gehäusetopfes 17 abdichtet, und der zweiten Dichtung 12, die den Innenleiter 8 gegen den Gehäusetopf 17 abdichtet, ist die Abdichtung der beiden leitfähigen Elemente 8, 9 der Einkoppeleinheit 7 gegen den Prozeß hin - und zwar selbst dann, wenn im Prozeß, sprich im Behälter 2, die zuvor genannten extremen Temperaturen und/oder Drücke herrschen.

Die Dichtkeramik 10 ist bevorzugt aus Aluminium- oder Zirkoniumoxid gefertigt. Selbstverständlich ist auch jede andere Keramik, die ausreichend temperatur-, druck- und chemisch beständig ist, als Dichtkeramik 10 verwendbar. Bei den Dichtungen 11, 12 handelt es sich um sog. Stopfbuchs-Packungen, wie sie von verschiedenen Herstellern in den unterschiedlichsten Ausgestaltungen und für die unterschiedlichsten Anwendungen angeboten und vertrieben werden. Es hat sich gezeigt, daß Graphit-Stopfbuchs-Packungen für die Hochtemperaturanwendung besonders geeignet sind, da sie Temperaturen bis zu 550° C und Drücke bis 1000 bar (bzw. 3000 bar bei inerter Atmosphäre) aushalten.

Die erfindungsgemäße Abdichtung der Einkoppeleinheit 7 gegen den Prozeß hin zeichnet sich insbesondere durch die nachfolgend genannten Vorteile aus:
- sie ist in hohem Maße chemisch beständig;
- sie ist in hohem Maße hitzebeständig;
- sie ist in hohem Maße druckbeständig.

Bevorzugt kommen in Verbindung mit der erfindungsgemäßen Lösung Stopfbuchs-Packungen 11, 12 zur Anwendung, die aus einzelnen Ringelementen 39 bestehen. Stopfbuchs-Packungen 11, 12 aus mehreren Ringelementen 39 haben gegenüber Stopfbuchs-Packungen 11, 12, die lediglich ein ringförmiges Element 39 mit einer entsprechend größeren Höhe aufweisen, den Vorteil, daß sie sukzessive einzeln vorspannbar sind. Hierdurch läßt sich über die gesamte abzudichtende Fläche eine in hohem Maße konstante radiale Spannung erzielen. Hingegen läßt sich ein Ringelement 39 mit einer Dimensionierung, die mehreren Ringelemente 39 entspricht, lediglich inhomogen vorspannen, was sich auch in einer inhomogenen radialen Spannung und damit in einer inhomogenen Abdichtung niederschlägt.

Die Vorspannung auf die Stopfbuchs-Packung 12, die zwischen dem Innenleiter 8 und der Dichtkeramik 10 angeordnet ist, wird über den Druckring 20 erreicht. Der Vorspannung der Stopfbuchs-Packung 11 dienen der Druckring 19 und der Spannring 21. Die Stopfbuchs-Packung 11 zwischen Gehäusetopf 17 bzw. Außenleiter 9 und Dichtkeramik 10 wird außerdem durch den Druckring 19 und den Spannring 21 axial fixiert; die Stopfbuchs-Packung 12 zwischen Innenleiter 8 und Dichtkeramik 10 wird durch die Mutter 22 und die Kontermutter 24 über die Stützkeramik 25 axial fixiert.

Wie bereits gesagt, dienen die Dichtungen 11, 12 dazu, den Innenleiter 8 und den Außenleiter 9 des TDR-Füllstandsmeßgeräts 1 selbst unter extremen Bedingungen zuverlässig gegen den Prozeß hin abzudichten. Die Dicht-keramik 10 ist zur Prozeßtrennung bestens geeignet; allerdings hat sie den erheblichen Nachteil, daß sie auch eine dielektrische Barriere für die hochfrequenten Meßsignale darstellt.

In erster Näherung lassen sich Impedanzsprünge innerhalb der Einkoppeleinheit 7 vermeiden, wenn der Durchmesser des Außenleiters 9 den 14-fachen Wert des Durchmessers des Innenleiters 8 aufweist. Da aus den bereits genannten Gründe der Innenleiter 8 eine gewisse Stabilität und damit einen entsprechend großen Durchmesser haben muß, müßte der Außenleiter 9 und damit die Einkoppeleinheit 7 beachtliche Dimensionen aufweisen. Derartige Geräte sind nur für spezielle Anwendungen überhaupt brauchbar; zudem sind sie aufgrund der benötigten entsprechend großen Materialmengen sehr teuer und damit für eine Massenproduktion ungeeignet. Weiterhin muß der Prozeßanschluß, sprich das Einschraubteil 18, gewissen Normen genügen. Damit nicht genug: Zwar wird durch eine entsprechend große Dimensionierung der Dichtkeramik 10 erreicht, daß sich der Wellenwiderstand bei Auftreffen auf die dielektrische Barriere nicht ändert; allerdings besteht dann die Gefahr, daß Meßsignale höherer Moden angeregt werden, die auf dem Wellenleiter 4 nicht ausbreitungsfähig sind. Damit wird die Intensität der Meßsignale verringert und die Meßgenauigkeit reduziert.

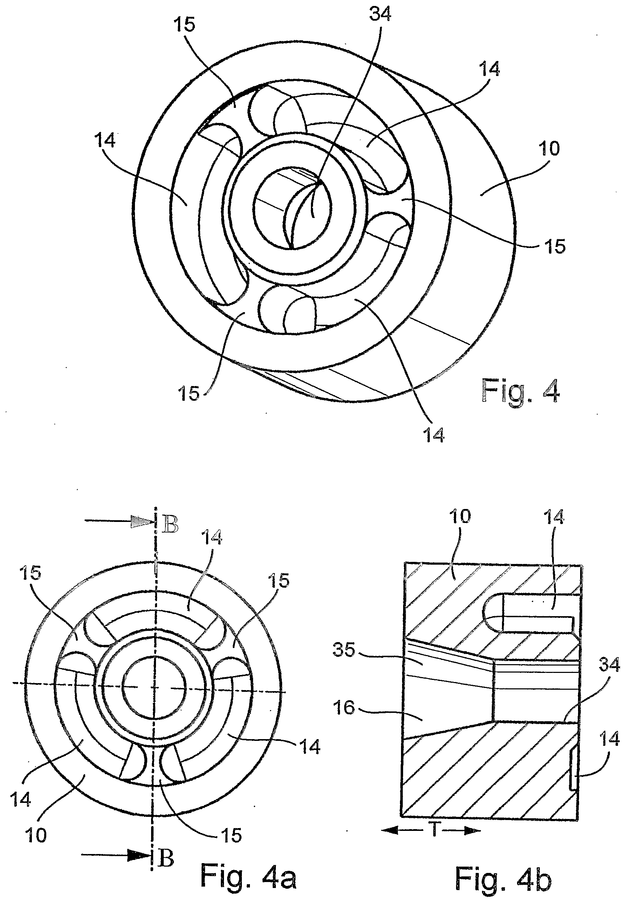

Eine Ausgestaltung der Dichtkeramik 10, die in Verbindung mit der erfindungsgemäßen Lösung bevorzugt zum Einsatz kommt, ist in den Figuren Fig. 4, Fig. 4a und Fig. 4b im Detail dargestellt. Während die Fig. 4 eine perspektivische Ansicht der Dichtkeramik 10 zeigt, ist in Fig. 4a eine Draufsicht auf die in Fig. 4 gezeigte Dichtkeramik 10 zu sehen; Fig. 4b zeigt einen Längsschnitt gemäß der Kennzeichnung B-B in Fig. 4.

Es hat sich herausgestellt, daß der Wellenwiderstand der Dichtkeramik 10 erheblich vergrößert werden kann, wenn in der Dichtkeramik 10 zumindest eine Materialaussparung 14 vorhanden ist. Diese Materialaussparung 14 bzw. der Luftspalt ist axial in der Dichtkeramik 10 angeordnet und reicht maximal bis zu einer Tiefe T in die Dichtkeramik 10 hinein. Da die Dichtkeramik 10 die Prozeßtrennung bewerkstelligen soll, ist es natürlich wenig sinnvoll, die Materialaussparung 14 durchgehend zu gestalten, obwohl dies aus Sicht der Wellenausbreitung optimal wäre. Zum Prozeß hin stellt sich den Meßsignalen also wieder ab der Tiefe T eine dielektrische Barriere in den Weg. Diese Barriere-Wirkung läßt sich dadurch vermindern, daß axial im Bereich der mittigen Bohrung 34 eine Aufweitung der Bohrung 34 vorgesehen ist. Bevorzugt ist die Aufweitung konisch ausgestaltet, wobei die konische Aufweitung auf den Prozeß hin gerichtet ist. Im wesentlichen startet die Aufweitung in einer Tiefe T, in der auch die untere Begrenzungsfläche der Materialaussparung 14 zu finden ist.
Die konische Aufweitung ist jedoch kein notwendiges Erfordernis. Im Prinzip kann die Aufweitung jede beliebige Form aufweisen: So kann sie im Querschnitt zylindrisch oder rechteckig ausgebildet sein. Alternativ zur Aufweitung kann auch der Innenleiter 8 bevorzugt in dem zuvor genannten Bereich eine Verjüngung aufweisen. Hierdurch läßt sich ein vergleichbarer Effekt wie mit der Aufweitung der Bohrung 34 erreichen. In beiden Fällen ist darüber hinaus im Bedarfsfall eine Abstützung vorgesehen, durch die der Innenleiter 8 vor Biegebelastungen geschützt wird. Bevorzugt ist die Abstützung im Bereich der Bohrung 34, der Verjüngung oder auf der dem Prozeß zugewandten Seite der Einkoppeleinheit 7 vorgesehen.

Die Dichtkeramik 10 steht infolge der Abdichtung durch die Stopfbuchs-Packungen 11, 12 unter radialer Spannung. Die Materialaussparung 14 verringert natürlich die Stabilität der Dichtkeramik 10. Um die Stabilität der Dichtkeramik 10 in radialer Richtung zu erhöhen, sind über die Fläche der Materialaussparung 14 verteilt mehrere radial verlaufende Stege 15 vorgesehen.

An vorhergehender Stelle wurde bereits angesprochen, daß aufgrund des direkten Kontakts des Wellenleiters 4 mit dem Medium 4 mitunter erhebliche Kräfte auf den Wellenleiter 4 und letztlich auf den Innenleiter 8 einwirken. Bei diesen Kräften kann es sich um axiale Zug- oder Druckkräfte oder um radial wirkende Kräfte handeln. Letztere können ein Biegemoment auf den Innenleiter 8 ausüben, was im schlimmsten Fall dazu führen kann, daß der Innenleiter 8 gebogen und die Dichtwirkung der Stopfbuchs-Packungen 11, 12 verloren geht. Damit ist die gewünschte Prozeßtrennung nicht mehr vorhanden. Um die Gefahr einer VerdrehungNerschiebung des Innenleiters 8 zu reduzieren, ist im unteren dem Prozeß zugewandten Bereich der Temperaturreduktionseinheit 27 ein Stützelement 25 vorgesehen. Bei dem Stützelement 25 handelt es sich bevorzugt um eine Stützkeramik 25. Je nach Temperaturverhältnissen am Einbauort des Stützelements 25 kann dieses auch aus einem nicht-keramischen dielektrischen Material gefertigt sein.
Des weiteren verhindert die Stützkeramik 25, daß der Innenleiter 8 axial nach oben - also in die dem Prozeß abgewandte Richtung - bewegbar ist. Zudem verhindert der Druckring 20, der über ein Gewinde mit dem Innenleiter 8 fest verbunden ist und sich mit der Schulter 40 an der Dichtkeramik 10 abstützt, daß der Innenleiter 8 in die dem Prozeß zugewandte Richtung bewegt werden kann.

Um die temperaturempfindliche Elektronik - sprich die Regel-/Auswerteeinheit 13 - vom Prozeß thermisch zu entkoppeln, ist die Temperaturreduktionseinheit 27 vorgesehen. Die Temperaturreduktionseinheit 27 ist so ausgestaltet, daß sie in effektiver Weise dafür Sorge trägt, daß die hohen im Prozeß herrschenden Temperaturen von einigen hundert Grad Celsius die Elektronikteile nicht schädigen. Als dielektrisches Material zwischen dem Innenleiter 8 und dem Außenleiter 9 dient innerhalb der Temperaturreduktionseinheit 27 Luft.

Die Temperaturreduktion erfolgt in der Einheit 27 auf unterschiedlichen Wegen:
- aufgrund der gewellten Außenfläche der Temperaturreduktionseinheit 27 wird der Wärmefluß von der dem Prozeß zugewandten zu der dem Prozeß abgewandten Seite des Füllstandsmeßgeräts 1 gehemmt;
- aufgrund der gewellten und damit vergrößerten Außenfläche der Temperaturreduktionseinheit 27 wird die Wärme effektiv an die Umgebung abgegeben;
- der Wärmeübertrag an die Umgebung durch Konvektion wird verbessert.

Weiterhin wird die Wärmeübertragung von dem Innenleiter 8 auf die Elektronik 13 über den Steckkontakt 31, 32 reduziert. Bevorzugt ist der Stecker 31 als Bananenstecker ausgebildet, wodurch die Kontaktfläche zwischen dem Stecker 31 und der Ausnehmung 32 auf ein Minimum reduziert ist.

Um die Elektronik 13 gasdicht von der Einkoppeleinheit 7 abzutrennen, ist die Glasdurchführung 29 vorgesehen. Glasdurchführungen als solche sind aus der Prozeßmeßtechnik bestens bekannt und werden auch von der Anmelderin angeboten und vertrieben.

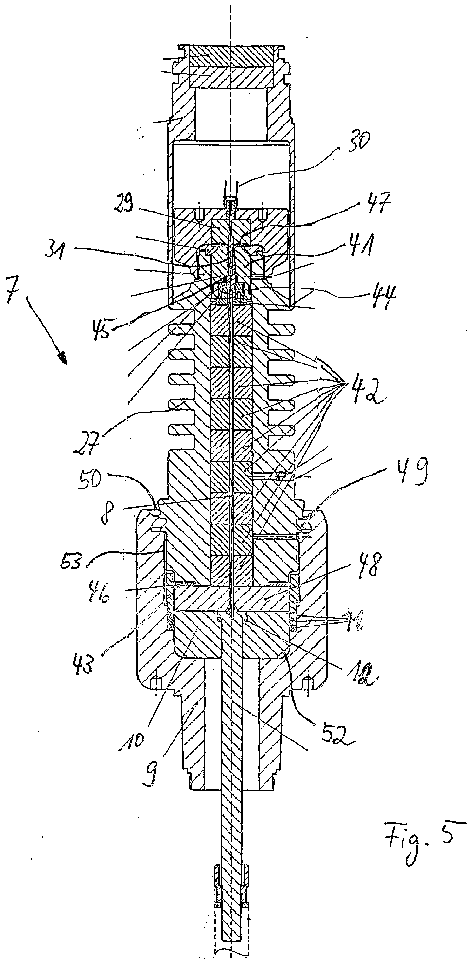

Fig. 5 zeigt einen Längsschnitt einer zweiten bevorzugten Ausführungsform der erfindungsgemäßen Vorrichtung. Insbesondere handelt es sich um eine Einkoppeleinheit 7 für ein TDR-Füllstandsmessgerät. TDR-Füllstandsmessgeräte werden von der Anmelderin unter der Bezeichnung LEVELFLEX angeboten und vertrieben. Bei der gezeigten Variante handelt es sich gleichfalls um eine Einkoppeleinheit, die bei hohen Drücken und bei hohen Temperaturen einsetzbar ist. Der prinzipielle mechanische Aufbau der Einkoppeleinheit 7 ist weitgehend identisch mit dem in Fig. 3 gezeigten Aufbau: Auch hier dient die Dichtkeramik 10 der Prozeßtrennung, d.h. sie stellt eine wirksame Barriere zum Prozeßmedium hin dar, die selbst bei hohen Temperaturen und Drücken den Innenraum der Einkoppeleinheit 7 vom Prozess trennt. Um diese sichere Prozesstrennung zu gewährleisten, ist eine erste Dichtung 12 zwischen dem Innenleiter 8 und der Dichtkeramik 10 vorgesehen; eine zweite Dichtung 11 befindet sich zwischen der Dichtkeramik 10 und dem Außenleiter 9. Bevorzugt handelt es sich bei den Dichtungen 11, 12 um Graphit-Stopfbuchspackungen.

Bedenken hinsichtlich der chemischen Beständigkeit der Dichtkeramik konnten gleichfalls beseitigt werden. Es hat sich herausgestellt, dass die chemische Beständigkeit einer Keramik ganz wesentlich von deren Reinheitsgrad abhängt. So ist eine hochreine Keramik mit einem Reinheitsgrad von grösser oder gleich 99,7 % hydrolysebeständig.

Die zuvor beschriebene Prozeßtrennung hat den Nachteil, dass sie nicht gasdicht ist. Diese Aufgabe erfüllt aber die Glasdurchführung 29, die den dem Prozeß zugewandten Raumbereich der Einkoppeleinheit 7 gasdicht von dem dem Prozeß abgewandten Raumbereich trennt. Die Glasdurchführung 29 hat also den erheblichen Vorteil, dass sie gasdicht ist; der Nachteil einer Glasdurchführung 29 liegt darin, dass Glas nicht die chemische Beständigkeit einer Dichtkeramik 10 aufweist. Erfindungsgemäss werden die beiden Vorteile einer Dichtkeramik 10 und einer Glasdurchführung 29 kombiniert, so dass die eine die Nachteile der anderen kompensieren kann, während die Vorteile beider Dichtungen 10, 29 additiv zum Tragen kommen.

Wie zuvor gesagt, ist die Glasdurchführung 29 chemisch wenig inert gegenüber aggressiven Prozessmedien. Da es nicht ausgeschlossen werden kann, dass trotz der Dichtkeramik 10 mit der Zeit Prozessmedium in den Raumbereich zwischen der Dichtkeramik 10 und der Glasdurchführung 29 eindringt und nachfolgend die Glasdurchführung schädigt, ist vor der Glasdurchführung 29 in Richtung Prozess eine zusätzliche Dichtung 51, insbesondere eine Kunststoffdichtung vorgesehen. Bevorzugtes Material für die Dichtung 51 ist übrigens PEEK. Die Abdichtung der Dichtung 51 gegen den Innenleiter 8 und Außenleiter 9 erfolgt über die O-Ringe 44, 45. Die Dichtung 51 ist optional und hat eine quasi redundante Dichtfunktion: Sollte doch mit der Zeit Prozessmedium durch die Dichtkeramik 10 in das Innere der Einkoppeleinheit 7 eindringen, schützt die Dichtung 51 die Glasdurchführung 29. Zum Schutze der Glasdurchführung 29 gegen die durch den Prozeßdruck auf die Dichtung 51, bzw. das Dichtelement 41, wirkenden Kräfte dient der Metallring 47. Dieser Metallring 47 dient als Widerlager für das Dichtelement 41, so daß auch bei einer fertigungsbedingt nicht vollständig planen Stirnfläche der Glasdurchführung keine lokalisierten Spannungen auf das Glas einwirken können.
Bei der in Fig. 3 dargestellten Ausgestaltung der erfindungsgemässen Vorrichtung wurde der Wellenwiderstand der Dichtkeramik 10 dadurcherhöht, dass in die Dichtkeramik 10 Materialaussparungen eingebracht sind. Bei dieser Ausgestaltung wurde also das Augenmerk darauf gelegt, den Wellenwiderstand auf dem Weg der hochfrequenten Messsignale durch die Einkoppeleinheit 7 möglichst konstant zu halten und Impedanzsprünge zu vermeiden. Nun ist es jedoch so, dass in Hohlräumen im Innern der Einkoppeleinheit 7 über längere Zeiträume gesehen, Prozessmedium eindringen und sich dort ablagern kann. Diese Ablagerungen oder Ansammlungen führen ebenfalls zu einer - zudem auch noch völlig unkontrollierten - Änderung des Wellenwiderstands im Ausbreitungsweg der hochfrequenten Meßsignale und damit zu Messfehlern bei der Füllstandsbestimmung.

Daher ist in der in Fig. 5 vorgeschlagenen Ausgestaltung der erfindungsgemässen Vorrichtung der Raumbereich, der zwischen der Dichtkeramik 10 und der Glasdurchführung 29 bzw. der Dichtung 51 liegt, nahezu vollständig mit einem dielektrischen Material ausgefüllt. Durch die Auffüllung aller Hohlräume mit einem dielektrischen Material wird innerhalb der Einkoppeleinheit 7 ein definierter Zustand geschaffen. Da kein entsprechender Leer-Raum mehr vorhanden ist, können Ablagerungen irgendwelcher Art diesen definierten Zustand nachfolgend auch nicht mehr ändern. Bevorzugt handelt es sich bei dem dielektrischen Füllmaterial um eine Keramik. Im gezeigten Fall handelt es sich um Keramikscheiben 42 mit einer Mittenbohrung, die sehr passgenau auf den Durchmesser des Innenleiters 8 abgestimmt ist. Der einzige Impedanz-sprung, der innerhalb der Einkoppeleinheit 7 auftritt, liegt im Bereich der Dichtkeramik 10 an der Stelle, an der der Durchmesser des Innenleiters 8 zur Erreichung der geforderten mechanischen Festigkeit einen Sprung macht. Das ist in der in Fig. 5 vorgeschlagenen Ausgestaltung deshalb unkritisch, weil der Rest der Einkoppeleinheit 7 sowie der Signalpfad über das Koaxkabel 30 zur Regel-/Auswerteeinheit 13 ohne größere Impedanzsprünge dimensioniert werden kann, so daß zwar durch die einmalige Reflexion an dem Impedanz-sprung ein geringer Teil des Nutzsignals verloren geht, jedoch keine Vielfach-reflexionen entstehen, die die Meßfähigkeit im Nahbereich durch sogenanntes Klingeln beeinträchtigen könnten.

Um eine hohe Konstanz des Wellenwiderstands in der Einkoppeleinheit 7 sicherzustellen, müssen also insbesondere die Bereiche, in denen eine hohe elektrische Feldstärke auftritt, mit dem dielektrischen Material ausgefüllt sein. So stören beispielsweise die beiden Hohlräume 49, 52 die Ausbreitung der Messsignale sehr wenig, da in diesen vom Innenleiter 8 relativ weit entfernten Bereichen die elektrische Feldstärke schon relativ gering ist. Nützlich sind diese Hohlräume 49, 52 übrigens, um Spannungen, die z.B. infolge des Prozeßdrucks auftreten, auszugleichen und abzubauen. So dient der ringförmige Hohlraum 49 der Entlastung der Schweissnaht 50 beim Auftreten von mechanischen Spannungen. Die Spannungen selbst werden auf die Schraubverbindung 53 übertragen.

### Bezugszeichenliste

- 1: Füllstandsmeßgerät
- 2: Behälter
- 3: Deckel
- 4: Wellenleiter
- 5: Medium
- 6: Oberfläche des Mediums
- 7: Einkoppeleinheit
- 8: Erster leitfähiges Element / Innenleiter / Stab
- 9: Zweites leitfähiges Element / Außenleiter
- 10: Dielektrisches Element / Dichtkeramik
- 11: Erste Dichtung / Stopfbuchspackung
- 12: Zweite Dichtung / Stopfbuchspackung
- 13: Regel-/Auswerteeinheit
- 14: Materialaussparung
- 15: Steg
- 16: Materialaussparung
- 17: Gehäusetopf
- 18: Einschraubteil
- 19: Erster Druckring
- 20: Zweiter Druckring
- 21: Erster Spannring
- 22: Mutter
- 23: Schulter
- 24: Kontermutter
- 25: Arretiereinheit / Stützkeramik
- 26: Schulter
- 27: Temperaturreduktionseinheit
- 28: Hohlraum
- 29: Glasdurchführung
- 30: Koaxkabel
- 31: Stecker
- 32: Ausnehmung
- 33: Mutter
- 34: Bohrung
- 35: Kontaktfläche
- 36: Kontaktfläche
- 37:
- 38: Schulter
- 39: Ringförmiges Dichtelement
- 40: Schulter
- 41: Dichtelement
- 42: Keramikscheibe
- 43: Dichtring
- 44: O-Ring
- 45: O-Ring
- 46: Unterlegscheibe / Graphit-Flachdichtung
- 47: Metallring
- 48: Keramikscheibe
- 49: Hohlraum
- 50: Schweissnaht
- 51: Dichtung
- 52: Hohlraum
- 53: Schraubverbindung

## Patentansprüche

1. Vorrichtung zur Bestimmung und/oder Überwachung des Füllstands eines Mediums (5) in einem Behälter (2) mit einem ersten leitfähigen Element (8), einem zweiten leitfähigen Element (9) und einer Dichtkeramik (10), wobei eine dem Prozess zugewandte Oberfläche der Dichtkeramik (10) mit dem Prozess in Kontakt ist und zwecks Prozeßtrennung in einem Bereich zwischen den beiden leitfähigen Elementen (8, 9) angeordnet ist, mit einer ersten als Stopfbuchspackung ausgebildeten Dichtung (12), die zwischen dem ersten leitfähigen Element (8) und der Dichtkeramik (10) vorgesehen ist, mit einer zweiten als Stopfbuchspackung ausgebildeten Dichtung (11), die zwischen der Dichtkeramik (10) und dem zweiten leitfähigen Element (9) vorgesehen ist, und mit einer Regel-/Auswerteeinheit (13), die den Füllstand des Mediums (5) in dem Behälter (2) anhand einer Kapazitätsmessung oder anhand der Messung der Laufzeit von Meßsignalen ermittelt.

2. Vorrichtung nach Anspruch 1,
wobei das erste leitfähige Element (8), das zweite leitfähige Element (9) und die Dichtkeramik (10) im wesentlichen koaxial zueinander angeordnet sind.

3. Vorrichtung nach Anspruch 1 oder 2,
wobei es sich bei dem ersten leitfähigen Element (8) um den Innenleiter und bei dem zweiten leitfähigen Element (9) um den Außenleiter eines TDR-Füllstandsmeßgeräts (1) handelt.

4. Vorrichtung nach Anspruch 1 oder 2,
wobei es sich bei der ersten Dichtung (11) und/oder der zweiten Dichtung (12) um eine Stopfpackung, die aus zumindest einem ringförmigen Teilelement (39) besteht, handelt.

5. Vorrichtung nach Anspruch 4,
wobei es sich bei der ersten Dichtung (11) und/oder der zweiten Dichtung (12) um eine Graphit-Stopfbuchspackung handelt.

6. Vorrichtung nach Anspruch 1 oder 2,
wobei in der Dichtkeramik (10) zumindest eine Materialaussparung (14) vorgesehen ist.

7. Vorrichtung nach Anspruch 6,
wobei die Materialaussparung (14) näherungsweise koaxial verläuft.

8. Vorrichtung nach Anspruch 6 oder 7,
wobei im Bereich der Materialaussparung (14) im wesentlichen radial verlaufenden Stege (15) vorgesehen sind.

9. Vorrichtung nach Anspruch 1, 6 oder 7,
wobei Arretierelemente (22, 24, 25) vorgesehen sind, die eine Bewegung des ersten leitfähigen Elements (8) relativ zu dem zweiten leitfähigen Element (9) in axialer Richtung verhindern.

10. Vorrichtung nach Anspruch 1, 6 oder 7,
wobei zumindest eine Temperaturreduktionseinheit (27) vorgesehen ist, die in axialer Richtung in dem Bereich zwischen der Dichtkeramik (10) und der Regel-/Auswerteeinheit (13) angeordnet ist.

11. Vorrichtung nach einem oder mehreren der vorhergehenden Ansprüche, wobei eine Glasdurchführung (29) im Bereich zwischen der Dichtkeramik (10) und der Regel-/Auswerteeinheit (13) vorgesehen ist.

12. Vorrichtung nach Anspruch 11,
wobei die Glasdurchführung (29) zwischen der Temperaturreduktionseinheit (27) und der Regel-/Auswerteinheit (13) vorgesehen ist.

13. Vorrichtung nach Anspruch 11 oder 12,
wobei vor der Glasdurchführung (29) ein weiteres Dichtelement (41) vorgesehen ist.

14. Vorrichtung nach Anspruch 1 bis 5 oder 9 bis 13,
wobei Hohlräume im Bereich zwischen der Dichtkeramik (10) und der Glasdurchführung (29) zumindest weitgehend mit dielektrischem Material gefüllt sind.

## Claims

1. Apparatus designed for determining and/or monitoring the level of a medium (5) in a vessel (2) with a first conductive element (8), a second conductive element (9) and a sealing ceramic (10), wherein a surface of the sealing ceramic (10) facing towards the process is in contact with the process and, for the purpose of process separation, is arranged in an area between the two conductive elements (8, 9), with a first seal (12) designed as a stuffing box, which is provided between the first conductive element (8) and the sealing ceramic (10), with a second seal (11) designed as a stuffing box, which is provided between the sealing ceramic (10) and the second conductive element (9), and with a control/evaluation unit (13), which determines the level of the medium (5) in the vessel (2) using a capacity measurement or using the measurement of the time-of-flight of the measurement signals.

2. Apparatus as claimed in Claim 1,
wherein the first conductive element (8), the second conductive element (9) and the sealing ceramic (10) are arranged in an essentially coaxial manner in relation to one another.

3. Apparatus as claimed in Claim 1 or 2,
wherein the first conductive element (8) is an internal conductor and the second conductive element (9) is an external conductor of a TDR level measuring device (1).

4. Apparatus as claimed in Claim 1 or 2,
wherein the first seal (11) and/or the second seal (12) are stuffing box units consisting of at least one annular subcomponent (39).

5. Apparatus as claimed in Claim 4,
wherein the first seal (11) and/or the second seal (12) is a graphite stuffing box.

6. Apparatus as claimed in Claim 1 or 2,
wherein at least one material opening (14) is provided in the sealing ceramic (10).

7. Apparatus as claimed in Claim 6,
wherein the material opening (14) extends in an approximately coaxial manner.

8. Apparatus as claimed in Claim 6 or 7,
wherein bars (15) which extend in an essentially radial manner are provided in the area of the material opening (14).

9. Apparatus as claimed in Claim 1, 6 or 7,
wherein locking elements (22, 24, 25) are provided that prevent a movement of the first conductive element (8) in relation to the second conductive element (9) in the axial direction.

10. Apparatus as claimed in Claim 1, 6 or 7
wherein at least one temperature reduction unit (27) is provided which is arranged in the axial direction in the area between the sealing ceramic (10) and the control/evaluation unit (13).

11. Apparatus as claimed in one or more of the previous claims,
wherein a glass feedthrough (29) is provided in the area between the sealing ceramic (10) and the control/evaluation unit (13).

12. Apparatus as claimed in Claim 11,
wherein the glass feedthrough (29) is provided between the temperature reduction unit (27) and the control/evaluation unit (13).

13. Apparatus as claimed in Claim 11 or 12,
wherein an additional sealing element (41) is provided in front of the glass feedthrough (29).

14. Apparatus as claimed in Claim 1 to 5 or 9 to 13,
wherein cavities in the area between the sealing ceramic (10) and the glass feedthrough (29) are at least largely filled with dielectric material.

## Revendications

1. Dispositif destiné à la détermination et/ou la surveillance du niveau d'un produit (5) dans un réservoir (2) avec un premier élément conducteur (8), un deuxième élément conducteur (9) et une céramique d'étanchéité (10), une surface de la céramique d'étanchéité (10) faisant face au process étant en contact avec le process et étant disposée à des fins de séparation du process dans une zone située entre les deux éléments conducteurs (8, 9), avec un premier joint (12) conçu en tant que presse-étoupe, qui est prévu entre le premier élément conducteur (8) et la céramique d'étanchéité (10), avec un deuxième joint (11) conçu en tant que presse-étoupe, qui est prévu entre la céramique d'étanchéité (10) et le deuxième élément conducteur (9), et avec une unité de régulation / d'exploitation (13), qui détermine le niveau du produit (5) dans le réservoir (2) au moyen d'une mesure de capacité ou au moyen de la mesure du temps de propagation de signaux de mesure.

2. Dispositif selon la revendication 1,
pour lequel le premier élément conducteur (8), le deuxième élément conducteur (9) et la céramique d'étanchéité (10) sont disposés pour l'essentiel de façon coaxiale les uns par rapport aux autres.

3. Dispositif selon la revendication 1 ou 2,
pour lequel il s'agit, concernant le premier élément conducteur (8), du conducteur intérieur et, concernant le deuxième élément conducteur (9), du conducteur extérieur d'un transmetteur de niveau TDR (1).

4. Dispositif selon la revendication 1 ou 2,
pour lequel il s'agit, concernant le premier joint (11) et/ou le deuxième joint (12), d'une garniture-étoupe, qui se compose au moins d'un élément partiel (39) annulaire.

5. Dispositif selon la revendication 4,
pour lequel il s'agit, concernant le premier joint (11) et/ou le deuxième joint (12), d'un presse-étoupe en graphite.

6. Dispositif selon la revendication 1 ou 2,
pour lequel est prévu, dans la céramique d'étanchéité (10), au moins un évidement de matière (14).

7. Dispositif selon la revendication 6,
pour lequel un évidement de matière (14) s'étend approximativement de manière coaxiale.

8. Dispositif selon la revendication 6 ou 7,
pour lequel sont prévus, dans la zone de l'évidement de matière (14), des nervures (15) s'étendant pour l'essentiel radialement.

9. Dispositif selon la revendication 1, 6 ou 7,
pour lequel sont prévus des éléments d'arrêt (22, 24, 25), qui empêchent un mouvement du premier élément conducteur (8) par rapport au deuxième élément conducteur (9) en direction axiale.

10. Dispositif selon la revendication 1, 6 ou 7
pour lequel est prévue au moins une unité de réduction de température (27), qui est disposée en direction axiale dans la zone située entre la céramique d'étanchéité (10) et l'unité de régulation / d'exploitation (13).

11. Dispositif selon l'une ou plusieurs des revendications précédentes,
pour lequel est prévue une traversée de verre (29) dans la zone située entre la céramique d'étanchéité (10) et l'unité de régulation / d'exploitation (13).

12. Dispositif selon la revendication 11,
pour lequel la traversée de verre (29) est prévue entre l'unité de réduction de température (27) et l'unité de régulation / d'exploitation (13).

13. Dispositif selon la revendication 11 ou 12,
pour lequel est prévu un élément d'étanchéité (41) supplémentaire devant la traversée de verre (29).

14. Dispositif selon la revendication 1 à 5 ou 9 à 13,
pour lequel des espaces creux sont remplis entre la céramique d'étanchéité (10) et la traversée de verre (29) au moins pour une large part avec un matériau diélectrique.
